Europäisches Patentamt

European Patent Office

Office européen des brevets

(19)

(11) Veröffentlichungsnummer : **0 123 045 B1**

(12) # EUROPÄISCHE PATENTSCHRIFT

(45) Veröffentlichungstag der Patentschrift :
**29.07.87**

(21) Anmeldenummer : **84101774.2**

(22) Anmeldetag : **21.02.84**

(51) Int. Cl.⁴ : **E 04 F 13/00, E 04 F 15/00, C 09 J 5/00, D 06 N 7/00**

(54) **Verfahren zum Festlegen einer Auslegeware, z.B. von Bodenbelägen, Wandverkleidungen oder dgl. auf einer Gegenfläche; Einrichtung zum Festlegen der Auslegeware, sowie Auslegeware dazu.**

(30) Priorität : **25.02.83 DE 3306627**
**25.02.83 DE 3306630**

(43) Veröffentlichungstag der Anmeldung :
**31.10.84 Patentblatt 84/44**

(45) Bekanntmachung des Hinweises auf die Patenterteilung : **29.07.87 Patentblatt 87/31**

(84) Benannte Vertragsstaaten :
**AT BE CH DE FR LI NL**

(56) Entgegenhaltungen :
**AT-B- 299 514**
**DE-A- 1 769 735**
**DE-A- 2 651 756**
**DE-U- 7 905 528**
**FR-A- 2 303 919**

(73) Patentinhaber : **Grossmann, Jürg**
**Birrwaldstr. 19**
**CH-8135 Langnau a.A. (CH)**

**Grossmann, Marcel**
**Maeschackerstr. 196**
**CH-8911 Rottenschwil (CH)**

(72) Erfinder : **Grossmann, Jürg**
**Birrwaldstr. 19**
**CH-8135 Langnau a.A. (CH)**
Erfinder : **Grossmann, Marcel**
**Maeschackerstr. 196**
**CH-8911 Rottenschwil (CH)**

(74) Vertreter : **Hiebsch, Gerhard F., Dipl.-Ing.**
**Erzbergerstrasse 5A Postfach 464**
**D-7700 Singen 1 (DE)**

EP 0 123 045 B1

**Beschreibung**

Die Erfindung betrifft ein Verfahren zum Festlegen einer Auslegeware, z. B. von Bodenbelägen, Wandverkleidungen oder dgl. auf einer Gegenfläche, insbesondere von am Einbauort auszurichtenden, wenigstens teilweise flexiblen Bahnen wie Teppichböden auf der Oberfläche eines Fußbodens, mittels einer Haftschicht, wobei chemisch passiv gestellte Klebepartikel in haftfreiem Zustand zwischen die aneinander festzulegenden Flächen gebracht werden, die Aktivierung der Klebepartikel nach dem Verlegen durch Einwirkung von Temperatur erfolgt und durch Senken dieser Temperatur eine feste Haftung hergestellt wird.

Außerdem bezieht sich die Erfindung auf eine Einrichtung zum Festlegen einer derartigen Auslegeware, wobei chemisch passiv gestellte Klebepartikel auf ein Hilfsmittel zwischen die aneinander festzulegenden Flächen gebracht werden.

Schließlich bezieht sich die Erfindung noch auf Auslegewaren dieser Art.

Die Schrift zum deutschen Gebrauchsmuster DE-U-79 05 528 beschreibt ein Hilfsmittel zum Verlegen eines Fußbodenbelages in Form eines Netzgewebes oder Netzgewirkes aus natürlichen und/oder künstlichen Fasern und/oder Fäden, welches mit einem weichmacherfreien Haftkleber imprägniert ist. Dieses klebrige Gebilde ist vor dem Verlegevorgang beidseits mit Ölpapier oder Folie belegt, um seinen Transport in Rollen zu ermöglichen.

Vor dem Verlegen des Teppichbodens wird das Netz in gewünschter Größe von der Rolle abgetrennt und beidseits das Schutzpapier entfernt. Dann klebt man das Netz auf den Fußboden und belegt es anschließend mit dem Teppichboden, so daß dieser dank des haftenden Netzes unverrückbar mit dem Fußboden verbunden ist. Hier wird der wesentliche Nachteil deutlich erkennbar : Ein Ausrichten des Teppichbodens auf dem klebrigen Netz ist nicht möglich. Zudem ist das Netz trotz des Schutzpapieres schlecht zu handhaben.

Als weiterer Mangel hat sich erwiesen, daß ein Entfernen des Teppichbodens sowohl zu dessen Verlust als auch zu einer erheblichen Verunstaltung des Fußbodens durch Netzreste und Kleber führt, die beide nur schwer entfernt werden können. Gleiche Nachteile haften im übrigen der Verwendung doppelseitig klebender Bänder an, die zudem lediglich eine Festlegung des Belages in streifenförmigen Zonen erlauben. Der Bereich zwischen diesen Zonen bleibt unverklebt, und der Belag neigt dort zu erhöhter Faltenbildung.

Ein Verfahren der eingangs genannten Art sowie die entsprechende Einrichtung und der damit hergestellte Bodenbelag sind aus der DE-A-2 651 756 bekannt.

Diese Schrift zeigt ein « Verfahren und eine Vorrichtung zum Aufheizen einer dünnen Schicht ». Es wird ein Teppich auf einem verputzten Fußboden verlegt und festgelegt, indem auf dem Fußboden Folien aufgebracht werden, die eine dünne Aluminiumseele (Größenordnung von einigen Zehntel Milimeter) mit Löchern haben. Die Aluminiumseele ist beidseitig mit einer hautartigen Klebstoffschicht abgedeckt. Darauf wird dann der Teppich aufgebracht. Mit Hilfe eines Generators, dem ein Schlitten zugeordnet ist, wird der Teppichboden verklebt, indem der Schlitten ein elektromagnetisches Induktionsfeld erzeugt, das in der Aluminiumseele wiederum Wirbelströme erzeugt, die die Klebstoffschichten aktivieren. Der Schlitten wird mit geeigneter Belastung über den Teppichboden geführt, womit eine zuverlässige Heißverklebung unter gleichzeitigem Druck erfolgt. Die angewendete Temperatur liegt zwischen 60 °C und 120 °C.

Außerdem wird in dieser Schrift auch alternativ angeboten, dünne Aluminiumpartikel zum Aufheizen mittels besagter Wirbelströme zu verwenden. Außerdem wird in dieser Schrift auch noch alternativ Graphitpuder geeigneter Korngrößenverteilung vorgeschlagen, um eine wirksame Heizschicht im obigen Sinn zu bilden.

Es ist aber stets wichtig gemäß dieser DE-A-2 651 756, daß zumindest Metall- oder Graphit-Partikel mit den Kleberpartikeln gemischt sind, um besagte Wirbelstrom-Induktionsaufheizung zu ermöglichen ; abgesehen vom Hauptvorschlag gemäß dieser Schrift, eine hauchdünne Aluminiumseele mit Löchern zu verwenden.

Im übrigen befaßt sich diese DE-A-2 651 756 aber ganz besonders mit der Ausbildung des Generators und des Schlittens zum Erzeugen der Induktions-Wirbelströme und bietet dafür auch ein Schaltbild an. Angesichts dieser Gegebenheiten hat sich der Erfinder das Ziel gesetzt, ein Verfahren und eine Einrichtung der eingangs erwähnten Art zu schaffen, dank deren der Verlegevorgang erheblich vereinfacht wird. Zum anderen soll das Lösen eines verlegten Teppichs vom Untergrund ermöglicht werden, ohne daß man den Untergrund und/oder dessen Teppichboden verunreinigt bzw. beschädigt. Darüber hinaus soll im Rahmen der Erfindung eine besonders günstig festzulegende Auslegeware selbst angeboten werden.

Zur Lösung dieser Aufgabe führt zum einen, daß die mit Aktivierungsmittel gemischten Kleberpartikel vor dem Verlegen in einem thermoplastischen Werkstoff auf ein Fadengelege als Traggerüst, insbesondere ein Netz- oder Gittergewebe, aufgebracht und getrocknet werden, wonach das Fadengelege in kaltem Zustand verlegt wird. Alternativ wird besagte Aufgabe dadurch gelöst, daß die mit Aktivierungsmittel gemischten Kleberpartikel in einem thermoplastischen Werkstoff ggf. auf dem Wege des Imprägnierens einem Faservlies aus organischen oder anorganischen Fasern zugeführt und getrocknet werden, wonach diese Einheit in kaltem Zustand des Werkstoffes verlegt wird.

Statt des Faservlieses kann erfindungsgemäß auch eine Folie Verwendung finden.

Während des aktivierten Zeitraumes nach Temperatureinwirkung, der bevorzugt etwa zwanzig Minuten beträgt, bleibt das Klebergemisch plastisch und klebrig ; anschließend verfestigt es sich und haftet.

Besondere Weiterbildungen sind in den Unteransprüchen gekennzeichnet.

Weitere Vorteile, Merkmale und Einzelheiten ergeben sich aus der nachfolgenden Beschreibung zweier unterschiedlicher Ausführungsformen sowie anhand der Zeichnung ; diese zeigt in

Figur 1 eine Schrägsicht in einen Teil eines Bauwerksraumes mit einer der beiden Ausführungsformen ;

Figur 2 ein vergrößertes Detail aus Fig. 1, geschnitten nach deren Linie II-II ;

Figur 3 eine schematisierte Schrägsicht auf die zweite Ausführungsform.

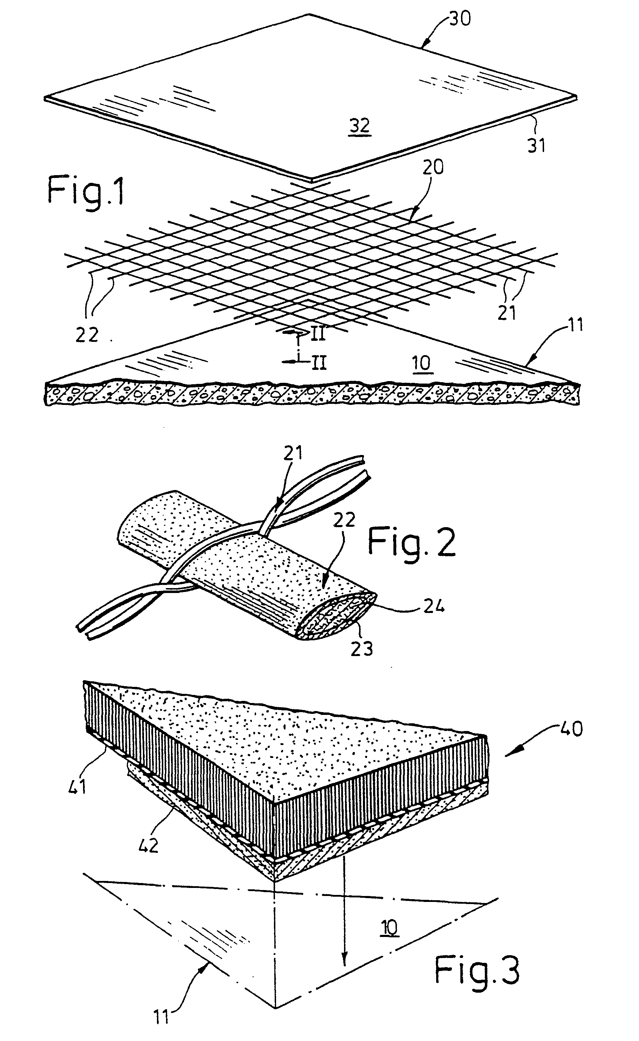

Auf die Oberfläche 10 des Fußbodens 11 eines — aus Gründen der Übersichtlichkeit nicht weiter dargestellten — Raumes wird gemäß Fig. 1 ein Haftnetz 20 aus Kettfäden 21 und Schußfäden 22 aufgelegt. Die Schußfäden 22 weisen jeweils einen Werkstoff aus einem Kleber sowie wenigstens einem beigemischten Aktivierungsmittel auf ; als letzteres dient ein Weichmacher, der erst oberhalb üblicher Raumtemperaturgrenzen aktiv werden und den Kleber freisetzen kann.

In Fig. 2 ist dieses Gemisch aus Kleber und Weichmacher als äußere Schicht 23 um einen Fadenkern 24 dargestellt, die Erfindung allerdings auf diese Applikationsform nicht beschränkt. So mögen beispielsweise auch die Kettfäden 21 — etwa nach einem Tauchtränken des Haftnetzes 20 — mit der Schicht 23 versehen oder Teile des Haftnetzes 20 — etwa granulatartig aufgelöst — als Haftelemente thermisch aktivierbar ausgebildet sein. Unterhalb einer Aktivierungstemperatur von beispielsweise 60 °C ist das Haftnetz 20 trocken und auf der Oberfläche 10 beliebig verschiebbar. Unter Einwirkung höherer Temperatur, welche etwa durch Mikrowellengeräte durch Heißluftapparate, mittels Infrarotstrahlen oder einer Art von Bügeleisen erzeugt werden können, wird der Kleber durch das Aktivierungsmittel freigesetzt, so daß das Haftnetz 20 durch sanften Druck fest mit der Oberfläche 10 verbunden werden kann.

Bringt man nun auf das Haftnetz 20 in passivem Zustand eine Teppichbodenbahn 30 auf, so kann man diese mit dem Haftnetz 20 beliebig verschieben und einrichten. Aktiviert man dann das Haftnetz 20 bzw. dessen Kleber in beschriebener Weise, entsteht eine innige Verbindung zwischen der Oberfläche 10 des Fußbodens 11 und der Unterfläche 31 des Teppichbodens 30, dessen Oberfläche mit 32 bezeichnet ist.

Es hat sich gezeigt, daß auch nach Aktivierung eine Korrektur der Teppichlage noch etwa während 10 bis 20 Minuten möglich bleibt.

Um nach längerer Haftzeit den Teppichboden 30 wieder entfernen zu können, ist es lediglich erforderlich, diesen erneut einer Temperatureinwirkung auszusetzen, wodurch das Gemisch aus Kleber und Weichmacher wieder plastisch wird.

Bei einem besonderen Beispiel zur Ausführungsform nach Fig. 1 und 2 ist das Haftnetz 20 aus einem verrottungsarmen Gewebe oder Faservlies hohen — über der Aktivierungstemperatur liegenden — Schmelzpunktes in eine Dispersion aus wenigstens einem Thermoplasten — beispielsweise Polyethylen, Polyvinyl (-azetat, -proprionat, -chlorid), Polyamid oder Polyacrylsäure, Copolymeren oder Mischungen daraus — und einem bei über 50 % des Feststoffgehaltes liegenden Dicyclohexylphthalat getränkt und unter 60 °C getrocknet.

Beispiel

Ein Glasgittergewebe von 120 g/qm$^2$ Flächengewicht wird mit einer Lösung der folgenden Zusammensetzung imprägniert :

31 Teile Wasser
2 Teile Entschäumer auf Paraffinölbasis
1 Teil oxethyliertes Nonylphenol (9 EO)
30 Teile Mischpolymerisatdispersion aus Acrylsäurebutylester-Vinylchlorid (50 % Trockensubstanz)
30 Teile Dicyclohexylphthalat (100-%ig)
4 Teile Verdickungsmittel auf Polyacrylsäurebasis
2 Teile Ammoniak.

Nach dem Trocknen verbleibt eine Auflage von 100 g/qm$^2$. Mit diesem Haftnetz läßt sich nach der oben beschriebenen Art ein Nadelfilzfußbodenbelag von 1 000 g/qm$^2$ Flächengewicht auf einem PVC-Fußboden rollstuhlfest fixieren.

Mit dem gleichen Glasgewebe wurde ein Tufting-Teppich von 800 g/qm$^2$ auf einem Zement-Estrich dauerhaft und schamponierfest verklebt.

Insbesondere dann, wenn das Haftnetz 20 in Flugzeugen oder an ähnlich feuergefährdeten Stellen verlegt werden soll, wird es entweder aus Kunststoffen, die bereits bei ihrer Herstellung Zusätze von Flammschutzmittel — beispielsweise in der Form von halogenierten Monomeren wie Vinylidenchlorid oder anderer chlorierter Verbindungen — beigegeben wurden, gefertigt, oder es werden unlösliche Pigmente wie Antimontrioxid oder Titandioxid in die eigentliche Netzmasse eingearbeitet.

Als Traggerüst kann ein — von Natur aus unbrennbares — Glasgitter eingesetzt werden, die Klebermasse mag zudem mit schwer entflammbar machenden, hier näher beschriebenen Zusätzen versehen sein.

Bei einer weiteren Herstellungsweise werden die Fasern bzw. Faservliese mit einer Lösung eines Flammschutzmittels behandelt, beispielsweise mit Melamin-Phosphatharzen, welche bei einer nachfolgenden Hitzebehandlung auf der Faser polymerisieren.

Bei der erfindungsgemäßen Ausführungsform nach Fig. 3 ist ein Teppichboden 40 an seiner Unterseite 41 mit einer Haftschicht 42 versehen. Diese wird bei Herstellung des Teppichbodens bzw. der Auslegeware 40 aufgebracht und enthält einen Kleber sowie wenigstens ein beigemischtes Aktivierungsmittel ; als letzteres dient ein Weichmacher, der erst oberhalb üblicher Raumtemperaturgrenzen aktiv werden und den Kleber freisetzen kann.

Unterhalb einer Aktivierungstemperatur von beispielsweise 66 °C ist die Haftschicht 42 trocken und der Teppichboden 40 auf der Oberfläche 10 beliebig verschiebbar. Unter Einwirkung höherer Temperaturen, welche etwa durch Heißluft, Mikrowellen, Infrarotstrahler oder eine Art Bügeleisen erzeugt werden können, wird der Kleber durch das Aktivierungsmittel freigesetzt und die Haftschicht 42 plastisch-klebrig, so daß sie durch sanften Druck fest mit der Oberfläche 10 verbunden werden kann. Die Phase plastischklebrigen Zustandes, innerhalb deren ein Orientieren und Ausrichten des Teppichbodens 40 noch ohne weiteres möglich ist, beträgt hier erfahrungsgemäß etwa 20 Minuten, wonach eine innige Verbindung zwischen der Haftschicht 42 und der Oberfläche 10 entstanden ist ; die Korrekturzeit, die vom Aktivierungszeitpunkt bis zum Augenblick des Entstehens der festen Haftung reicht, liegt hier also unter einer halben Stunde.

Um nach längerer Haftzeit den Teppichboden 40 wieder entfernen zu können, ist es lediglich erforderlich, erneut eine Temperatureinwirkung zu veranlassen, wodurch das Gemisch aus Kleber und Weichmacher wieder plastisch wird.

Bei einem Beispiel zur Ausführungsform der Fig. 3 besteht die Haftschicht 42 aus einer Dispersion mit wenigstens einem Thermoplasten — beispielsweise Polyvinyl (z. B. -azetat, -propionat, -chlorid) Polyamid, Polyäthylen, Polyacrylsäure, Copolymeren oder Mischungen daraus — und einem bei über 50 % des Feststoffgehaltes liegenden Dicyclohexylphthalat. Diese Haftschicht 42 wird unterhalb einer Temperatur von 66 °C getrocknet.

Beispiel

Die Auslegeware 40 wird mit einer Lösung der folgenden Zusammensetzung imprägniert :

    31 Teile Wasser
     2 Teile Entschäumer auf Paraffinölbasis
     1 Teil oxyethyliertes Nonylphenol (9 EO)
    30 Teile    Mischpolymerisatdispersion    aus Acrylsäurebutylester-Vinylchlorid    (50 % Trockensubstanz)
    30 Teile Dicyclohexylphthalat (100-%ig)
     4 Teile Verdickungsmittel auf Polyacrylsäurebasis
     2 Teile Ammoniak.

Insbesondere zur Verwendung der Auslegeware 40 in flammengefährdeten Bauwerken und Geräten wie Flugzeugen werden noch flammhemmende Zusätze bzw. Pigmente beigegeben beispielsweise in der Form von halogenierten Monomeren wie Vinylidenchlorid oder anderen chlorierten Verbindungen.

Ebenso können unlösliche Pigmente wie Antimontrioxid eingearbeitet werden.

**Patentansprüche**

1. Verfahren zum Festlegen einer Auslegeware, z. B. von Bodenbelägen, Wandverkleidungen oder dgl. auf einer Gegenfläche, insbesondere von am Einbauort auszurichtenden, wenigstens teilweise flexiblen Bahnen wie Teppichböden auf der Oberfläche eines Fußbodens, mittels einer Haftschicht, wobei chemisch passiv gestellte Klebepartikel in haftfreiem Zustand zwischen die aneinander festzulegenden Flächen gebracht werden, die Aktivierung der Klebepartikel nach dem Verlegen durch Einwirkung von Temperatur erfolgt und durch Senken dieser Temperatur eine feste Haftung hergestellt wird, dadurch gekennzeichnet, daß die mit Aktivierungsmittel gemischten Kleberpartikel vor dem Verlegen in einem thermoplastischen Werkstoff auf ein Fadengelege als Traggerüst, insbesondere ein Netz- oder Gittergewebe, aufgebracht und getrocknet werden, wonach das Fadengelege in kaltem Zustand verlegt wird.

2. Verfahren zum Festlegen einer Auslegeware, z. B. von Bodenbelägen, Wandverkleidungen oder dgl. auf einer Gegenfläche, insbesondere von am Einbauort auszurichtenden, wenigstens teilweise flexiblen Bahnen wie Teppichböden auf der Oberfläche eines Fußbodens, mittels einer Haftschicht, wobei chemisch passiv gestellte Klebepartikel in haftfreiem Zustand zwischen die aneinander festzulegenden Flächen gebracht werden, die Aktivierung der Klebepartikel nach dem Verlegen durch Einwirkung von Temperatur erfolgt und durch Senken dieser Temperatur eine feste Haftung hergestellt wird, dadurch gekennzeichnet, daß die mit Aktivierungsmittel gemischten Kleberpartikel in einem thermoplastischen Werkstoff gegebenenfalls auf dem Wege des Imprägnierens einem Faservlies aus organischen oder anorganischen Fasern oder einer Folie zugeführt und getrocknet werden, wonach diese Einheit in kaltem Zustand des Werkstoffes verlegt wird.

3. Verfahren nach einem der Ansprüche 1 oder 2, dadurch gekennzeichnet, daß die mit Aktivierungsmittel versehenen Klebepartikel zusätzlich als Granulat auf der Gegenfläche verteilt werden.

4. Verfahren nach einem der Ansprüche 1 bis 3, dadurch gekennzeichnet, daß die feste Haftung durch Einwirkung von Temperatur unter Erzeugung der plastischklebrigen Phase aufgehoben wird.

5. Verfahren nach einem der Ansprüche 1 bis 4, dadurch gekennzeichnet, daß die mit Aktivierungsmittel gemischten Kleberpartikel beim Herstellen der Auslegeware im thermoplastischen Werkstoff des Fadengeleges bzw. des Faservlieses aufgebracht und die Auslegeware in kaltem Zustand verlegt wird.

6. Verfahren nach einem der Ansprüche 1 bis 5, dadurch gekennzeichnet, daß die Trocknung des thermoplastischen Werkstoffes des Fadengeleges bzw. des Faservlieses unterhalb 60 °C erfolgt.

7. Verfahren nach einem der Ansprüche 1 bis 6, dadurch gekennzeichnet, daß die Kleberpartikel mit ihren Beimischungen durch Wärmeeinwirkung unter thermischer Aktivierung des Klebers in klebrigplastischen Zustand überführt werden, wonach die klebrige Phase über eine Einwirkzeit beibehalten wird, innerhalb deren die mit einander zu verbindenden Flächen durch Druck gegeneinander geführt werden.

8. Verfahren nach einem der Ansprüche 1 bis 7, dadurch gekennzeichnet, daß als Thermoplaste Polyvinyl (-azetat, -proprionat, -chlorid), Polyamid, Polyäthylen, Polyacrylsäureester, Copolymere oder dgl. allein oder in Mischung verwendet werden.

9. Verfahren nach einem der Ansprüche 1 bis 8, dadurch gekennzeichnet, daß als Weichmacher Methylphenyl-isophthalat oder Diphenylphthalat verwendet wird.

10. Verfahren nach einem der Ansprüche 1 bis 8, gekennzeichnet durch die Verwendung von Dicyclohexylphthalat als Weichmacher in einer Größenordnung von mehr als 50 % des Feststoffgehaltes und/oder von flammenhemmenden Zusatzstoffen, beispielsweise Melaminphosphatharzen.

11. Einrichtung zum Festlegen einer Auslegeware, z. B. von Bodenbelägen, Wandverkleidungen oder dgl. auf einer Gegenfläche, insbesondere von am Einbauort auszurichtenden, wenigstens teilweise flexiblen Bahnen wie Teppichböden auf der Oberfläche eines Fußbodens, mittels einer Haftschicht, wobei chemisch passiv gestellte Klebepartikel in haftfreiem Zustand auf ein Hilfsmittel zwischen die aneinander festzulegenden Flächen gebracht werden, die Aktivierung der Klebepartikel nach dem Verlegen durch Einwirkung von Temperatur erfolgt und durch Senken dieser Temperatur eine feste Haftung hergestellt wird, gekennzeichnet, durch ein flaches Fadengelege oder ein Faservlies (42) als Hilfsmittel, insbesondere ein verrottungsarmes Netz (20), aus anorganischen oder organischen Fasern, das mit dem chemisch passiv gestellten Kleberpartikel enthaltenden thermoplastischen Kunststoff versehen ist.

12. Einrichtung nach Anspruch 11, dadurch gekennzeichnet, daß das Fadengelege (20) oder das Faservlies (42) neben thermoplastischen Kunststoffen zumindest 50 Feststoffgewichtsprozente an Dicyclohexylphthalat oder neben thermoplastischen Kunststoffen als Weichmacher Methyl-phenylisophthalat oder Diphenylphthalat enthält.

13. Einrichtung nach Anspruch 11 oder 12, dadurch gekennzeichnet, daß die Haftschicht Polyvinyl (azetat, -proprionat, -chlorid), Polyamid, Polyäthylen, Polyacrylsäureester, Copolymere oder eine Mischung daraus als thermoplastische Anteile enthält und/oder mit einem Gemisch von Mischpolymerisaten aus Äthylen und Vinylacetat einerseits sowie thermoplastischen Kunstharzen und einem bei Raumtemperatur festen Weichmacher anderseits und/oder mit flammhemmenden Zusätzen versehen ist.

14. Bodenbelag, Wandverkleidung oder dergleichen Auslegeware für Wohn- und Objektausstattung, welche/r auf einer Gegenfläche, beispielsweise als flexible Bahn (40) auf der Oberfläche (10) eines Fußbodens (11), mittels einer haftenden Schicht (42) festlegbar ist, wobei chemisch passiv gestellte Klebepartikel in haftfreiem Zustand zwischen die aneinander festzulegenden Flächen auf ein Hilfsmittel gebracht werden, die Aktivierung der Klebepartikel nach dem Verlegen durch Einwirkung von Temperatur erfolgt und durch Senken dieser Temperatur eine feste Haftung hergestellt wird, gekennzeichnet durch ein Fadengelege als Hilfsmittel, insbesondere ein Netz- oder Gittergewebe, oder ein Faservlies (42) als Hilfsmittel, auf das als Traggerüst die mit Aktivierungsmittel gemischten Kleberpartikel vor dem Verlegen in einem thermoplastichen Werkstoff aufgebracht und getrocknet sind wobei das Fadengelege oder das Faservlies zwischen die Auslegeware und die Gegenfläche eingebracht ist.

**Claims**

1. A method of fastening a covering material, e. g. floor coverings, wall facings or the like to the surface of a substratum, especially at least partly flexible covering materials to be installed on site such as carpets, to the surface of a floor by means of a bonding layer wherein chemically passive, adhesive particles in a non-adhesive state are placed between the surfaces to be fixed together and, after adjusting the covering material, the adhesive particles are activated by heat, whereinafter a firm bond is produced upon subsequent cooling, characterized in that the adhesive particles, mixed with an activating agent, are applied, before laying, in a thermoplastic material to a supporting mesh of filaments, especially a network- or grid fabrics, and are dried, after which the mesh of filaments is laid in a cold state.

2. A method of fastening a covering material, e. g. floor coverings, wall facings or the like to the surface of a substratum, especially at least partly flexible covering materials to be installed on site such as carpets, to the surface of a floor, by means of a bonding layer wherein chemically passive, adhesive particles in a non-adhesive state are placed between the surfaces to be fixed together and, after adjusting the covering material, the adhesive particles are activated by heat, whereinafter a form bond is produced upon subsequent cooling, characterized in that the adhesive particles the adhesive particles, mixed with an activating agent, in a thermoplastic material are supplied, possibly by impregnation, to a fibrous tissue of organic or unorganic fibres or a foil, and are dried, after which this material is laid in a cold state.

3. A method according to one of the claims 1 or 2, characterized in that the adhesive particles provided with an activating agent, are distributed additionally over the surface of the substratum as a granulate.

4. A method according to one of the claims 1 or 3, characterized in that the firm bond is neutralized by the influence of temperature in the plastic viscid phase.

5. A method according to one of the claims 1 to 4, characterized in that the adhesive particles, mixed with an activating agent, are applied, when the covering material is produced, to the thermoplastic material of the mesh of filaments and the fibrous tissue respectively and that the covering material is laid in a cold state.

6. A method according to one of the claims 1 to 5, characterized in that the thermoplastic material of the mesh of filaments and the fibrous tissue respectively is dried below 60 °C.

7. A method according to one of the claims 1 to 6, characterized in that the adhesive particles with their admixtures are converted into a viscid plastic state by the influence of heat, with thermal activation of the adhesive, after which the adhesive phase is maintained over an effective period of time, within which the surfaces to be fixed together are adjusted against each other under pressure.

8. A method according to one of the claims 1 to 7, characterized in that polyvinyl (acetate, propionate or chloride), polyamide, polyethylene, polyacrylate, or copolymers thereof are used alone or in a mixture as a thermoplastic material.

9. A method according to one of the claims 1 to 8, characterized in that methyl phenyl isophthalate or diphenyl phthalate are used as a plasticizer.

10. A method according to one of the claims 1 to 8, characterized in that dicyclohexyl is used as a plasticizer in an amount of more than 50 % of the solid matter content and/or of any flame-retarding additives, e. g. melamin phosphate resin.

11. A device of fastening a covering material, e. g. floor coverings, wall facings or the like to a substratum, especially at least partly flexible covering materials to be installed on site such as carpets to the surface of a floor by means of a bonding layer, wherein chemically passive adhesive particles in a non-adhesive state are placed between the surfaces to be fixed together and, after adjusting the covering material, the adhesive particles are activated by heat, whereinafter a firm bond is produced upon subsequent cooling, characterized by a flat mesh of filaments or a fibrous tissue (42) as an auxiliary, especially a netting (20), which is not decaying easily, of organic or unorganic fibres, which is provided with the thermoplastic material containing chemically passive adhesive particles.

12. A device according to claim 11, characterized in that the mesh of filaments (20) or the fibrous tissue (42) contains, in addition to the thermoplastic material, at least 50 % dicyclohexyl phthalate relative to the solid matter content, and contains methyl phenyl isophthalate or diphenyl phthalate as a plasticizer.

13. A device according to claim 11 or 12, characterized in that the bonding layer contains polyvinyl (acetate, propionate or chloride), polyamide, polyethylene, polyacrylate, copolymers or a mixture thereof and/or is provided with a mixture of copolymers of ethylene or vinyl acetate on the one hand and thermoplastic synthetic resins and a plasticizer, which is solid at room temperature, on the other hand, and/or is provided with flame-retarding additives.

14. A floor covering, wall facing or the like covering material for residential or general furnishing which can be fixed to a substratum, e. g. as a flexible carpet (40) to the surface (10) of a floor (11) by means of a bonding layer (42), wherein chemically passive adhesive particles in a non-adhesive state are applied to an auxiliary between the surfaces to be fixed together and, after adjusting the covering material, the adhesive particles are activated by heat, whereinafter a firm bond is produced upon subsequent cooling, characterized by a supporting mesh of filaments as an auxiliary, especially a network- or grid fabrics, or a fibrous tissue (42) as an auxiliary, to which the adhesive particles, mixed with an activating agent, are applied as a support before laying to a thermoplastic material, and are dried, after which the mesh of filaments or the fibrous tissue is laid between the covering material and the surface of the substratum.

**Revendications**

1. Procédé pour la fixation d'une moquette par exemple de revêtement de sol, revêtement de mur ou des choses semblables sur une contre-surface en particulier de pans au moins partiellement flexibles qui sont à ajuster au lieu de montage comme par exemple la fixation de tapis pleins sur la surface d'un plancher moyennant une couche adhésive, fixant des particules adhésives rendues chimiquement passives dans leur état non adhésive entre les surfaces qui sont à fixer l'une contre l'autre, l'activation des particules adhésives s'effectuant après la pose moyennant l'influence de température arrivant à une adhésion fixe en abaissant cette température, caractérisé en ce que avant la pose les particules adhésives mêlées à un activateur sont mises en matière thermoplastique sur une nappe de fils en tant que cadre porteur notamment sur un tissu fileté ou de grille et séchées, la nappe de fils étant ensuite posée, en état froid.

2. Procédé pour la fixation d'une moquette par exemple de revêtements de sol, revêtements de mur ou des choses semblables sur une contre-surface en particulier de pans au moins partiellement flexibles qui sont à ajuster au lieu de montage comme par exemple la fixation de tapis pleins sur la surface d'un plancher moyennant une couche adhésive, fixant des particules adhésives rendues chimiquement passives dans leur état non adhésive entre les surfaces qui sont à fixer l'une contre l'autre, l'activation des particules adhésives s'effectuant après la pose moyennant l'influence de température arrivant à une adhésion fixe en abaissant cette température, caractérisé en ce que les particules adhésives mêlées à un activateur sont mises en matière thermoplastique, le cas échéant par l'imprégnation, à un tissu « spunbonded » se composant de fibres organiques ou inorganiques ou à une feuille et qu'elles sont séchées, cette unité étant posée ensuite, en état froid de la matière.

3. Procédé selon une des revendications 1 ou 2, caractérisé en ce que les particules adhésives mêlées à un activateur sont en plus distribuées comme granulé sur la contre-surface.

4. Procédé selon une des revendications 1 à 3, caractérisé en ce que l'adhésion fixe est supprimée par l'influence de température en engendrant la phase plastique-gluant.

5. Procédé selon une des revendications 1 à 4, caractérisé en ce que les particules adhésives mêlées à un activateur sont mises, lors de la production de la moquette, dans la matière thermoplastique de la nappe de fils ou plutôt du tissu « spunbonded » et que la moquette est posée en état froid.

6. Procédé selon une des revendications 1 à 5, caractérisé en ce que le séchage de la matière thermoplastique de la nappe de fils ou plutôt du tissu « spunbonded » s'effectue au-dessous de 60 °C.

7. Procédé selon une des revendications 1 à 6, caractérisé en ce que les particules adhésives avec leurs additions sont transformées en état plastique-gluant par l'influence thermique moyennant l'activation thermique de la colle, la phase gluant étant ensuite conservée pendant un temps agissant lors duquel les surfaces à lier sont mises l'une contre l'autre par pression.

8. Procédé selon une des revendications 1 à 7, caractérisé en ce qu'on utilise en tant que matières thermoplastiques les matières suivantes, isolées ou en mélanges : polyvinyle (polyvinylacétate, polyvinylpropionate, polychlorure de vinyle), polyamide, polyéthylène, polyester acrylique, copolymère ou des choses semblables.

9. Procédé selon une des revendications 1 à 8, caractérisé en ce que phényle méthylique-isophtalate ou diphénylphtalate sont utilisés en tant que plastifiants.

10. Procédé selon une des revendications 1 à 8, caractérisé par l'utilisation de dicyclohexylphtalate en tant que plastifiant de l'ordre de grandeur de plus que 50 % de la teneur de matières solides et/ou d'additifs ignifuges par exemple des résines de mélamine-phosphate.

11. Dispositif pour la fixation d'une moquette par exemple de revêtements de sol, revêtements de mur ou des choses semblables sur une contre-surface en particulier de pans au moins partiellement flexibles qui sont à ajuster au lieu de montage comme par exemple la fixation de tapis pleins sur la surface d'un plancher moyennant une couche adhésive, fixant des particules adhésives rendues chimiquement passives dans leur état non adhésive sur un auxiliaire entre les surfaces qui sont à fixer l'une contre l'autre, l'activation des particules adhésives s'effectuant après la pose moyennant l'influence de température arrivant à une adhésion fixe en abaissant cette température, caractérisé par une nappe de fils plate ou un tissu « spunbonded » (42) en tant qu'auxiliaire, notamment un filet qui ne pourrit que difficilement (20) composé de fibres inorganiques ou organiques qui est pourvu de la matière artificielle thermoplastique contenant les particules adhésives rendues chimiquement passives.

12. Dispositif selon la revendication 11, caractérisé en ce que la nappe de fils (20) ou le tissu « spunbonded » (42) contient outre les matières artificielles thermoplastiques au moins 50 pourcentage en poids de la matière solide du dicyclohexylphtalate ou outre les matières artificielles thermoplastiques en tant que plastifiants le phényl méthylique-isophtalate ou le diphénylphtalate.

13. Dispositif selon la revendication 11 ou 12, caractérisé en ce que la couche adhésive contient polyvinyle (polyvinylacétate, polyvinylpropionate, polychlorure de vinyle), polyamide, polyéthylène, polyester acrylique, copolymère ou un mélange de ceux-ci en tant que parts thermoplastiques et/ou qu'elle est pourvue d'un mélange de copolymères d'éthylène et d'acétate vinylique d'une part et de résines synthétiques thermoplastiques et un plastifiant solide à température ambiante d'autre part et/ou d'additifs ignifuges.

14. Revêtement de sol, revêtement de mur ou une moquette semblable pour l'équipement d'habitation ou d'un objet qu'on peut fixer sur une contre-surface moyennant une couche adhésive (42), par exemple comme pan flexible (40) sur la surface (10) d'un plancher (11) fixant des particules adhésives rendues chimiquement passives dans leur état non adhésive entre les surfaces qui sont à fixer l'une contre l'autre, l'activation des particules adhésives s'effectuant après la pose moyennant l'influence de température arrivant à une adhésion fixe en abaissant cette température, caractérisé par une nappe de fils en tant qu'auxiliaire, notamment un tissu fileté ou de grille ou un tissu « spunbonded » (42) comme auxiliaire sur lequel, en tant que cadre porteur, sont fixées et séchées avant la pose les particules adhésives mêlées à un activateur dans une matière thermoplastique, la nappe de fils ou le tissu « spunbonded » étant mise entre la moquette et la contre-surface.

Fig.1

Fig. 2

Fig.3